# EUROPÄISCHE PATENTSCHRIFT

(11) **EP 1 327 391 B1**
(45) Veröffentlichungstag und Bekanntmachung des Hinweises auf die Patenterteilung: **28.04.2004**
(21) Anmeldenummer: 02027011.2
(22) Anmeldetag: 03.12.2002
(51) Int. Cl.: A23G 3/00

(54) **Weich-Bonbon-Einheit**
Soft candy
Bonbon souple

(30) Priorität: 12.01.2002 DE 10200959
(43) Veröffentlichungstag der Anmeldung: 16.07.2003
(73) Patentinhaber: Mederer GmbH, 90763 Fürth (DE)
(72) Erfinder: Mederer, Herbert, 90768 Fürth (DE)
(74) Vertreter: Rau, Manfred, Dr. Dipl.-Ing.

(56) Entgegenhaltungen:
- EP-A- 0 349 841
- DE-A- 4 004 688
- ANON: "ZWEISCHICHT-GELEE" ZUCKER- UND SUESSWAREN WIRTSCHAFT, BECKMANN, LEHRTE, DE, Bd. 23, Nr. 2, 1970, Seiten 69-70, XP002055973 ISSN: 0373-0204

## Beschreibung

Die Erfindung betrifft eine Weich-Bonbon-Einheit nach dem Oberbegriff des Anspruches 1.

Aus der DE 40 04 688 A1 ist eine Weich-Bonbon-Einheit der gattungsgemäßen Art bekannt, bei der zwei Halbschalen, die miteinander verbunden werden, gefüllt und dann zusammengeklappt werden, sodass ein kugeliger Bonbon-Körper entsteht. Es können auch mehrere Lagen gegossen werden.

Aus der EP 0 349 841 B 1 ist ein Bonbon-Spielzeug in Form eines sogenannten "Hamburger" bekannt. Hierbei sind zwei Halbschalen vorhanden, die mit ihren Flanschrändern aneinander liegen und eine geschlossene Verpackung bilden. In dieser Verpackung sind mehrere Teile aus Fruchtgummi oder Schaumzucker angeordnet, die insgesamt wie ein aus zwei Halb-Brötchen und Zwischenlagen gebildeter Hamburger ausgestaltet sind. Diese Teile werden in der Form eines Hamburgers in der Verpackung zusammengehalten.

Aus der EP 0 936 872 B1 ist eine Weiterentwicklung dieses Bonbon-Spielzeugs bekannt, bei dem unter anderem jeweils zwei Lagen des Hamburgers einteilig ausgebildet sind.

Der Erfindung liegt die Aufgabe zugrunde, eine Weich-Bonbon-Einheit der gattungsgemäßen Art so weiterzubilden, dass sie eine besonders phantasievolle Ausgestaltung aufweist und damit neben dem Genusswert auch einen neuen Spielwert erhält.

Diese Aufgabe wird erfindungsgemäß durch die Merkmale im Kennzeichnungsteil des Anspruches 1 gelöst. Der eigentliche Weich-Bonbon, der im Wesentlichen aus einem Weich-Schaumzucker-Körper besteht, ist vollflächig und lagebeständig an der Innenwand anliegend in der geschlossenen Form angeordnet. Er bildet zusammen mit dieser Form die Weich-Bonbon-Einheit, sodass durch die aus den Halbschalen bestehende Form und dem Weich-Schaumzucker-Körper der Spielwert jeder einzelnen Einheit gebildet wird. Der Weich-Schaumzucker-Körper ist in Form eines Auges ausgebildet, wobei wiederum auf der Form aus transparentem Kunststoff durch Bedrucken noch weitere Oberflächenmerkmale des Auges gebildet werden können. Da der Körper nicht mit der Form verbunden ist, kann er zum Verzehr leicht entnommen werden. Die Einzelheiten zu den Ausgestaltungsmöglichkeiten ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung.

Es zeigt:
- Fig. 1: eine Draufsicht auf zwei Halbschalen,
- Fig. 2: einen Vertikalschnitt durch die beiden Halbschalen gemäß Fig. 1,
- Fig. 3: eine Draufsicht auf eine nach dem Zusammenklappen der Halbschalen gebildete Weich-Bonbon-Einheit,
- Fig. 4: eine Seitenansicht der Weich-Bonbon-Einheit nach Fig. 3 und
- Fig. 5: eine gegenüber Fig. 4 um 90° gedrehte Seitenansicht der WeichBonbon-Einheit.

Zwei halbkugelförmige Halbschalen 1, 2 aus dünner formstabiler, also steifer, transparenter Kunststoff-Folie weisen jeweils einen in einer gemeinsamen Mittelebene radial vorspringenden Flanschrand 3, 4 auf. Die Flanschränder 3, 4 sind mittels eines Filmscharniers 5 miteinander verbunden, d. h. die beiden Halbschalen 1, 2 bilden eine Einheit. An dem dem Filmscharnier 5 entgegengesetzten Ende ist jeweils eine Öffnungslasche 6, 7 ausgebildet.

Die beiden Halbschalen 1, 2 sind mit einem jeweils in diese eingegossenen halbkugelförmigen Teil-Körper 8 bzw. 9 gefiillt, der sich bis in die durch den jeweiligen Flanschrand 3, 4 gebildete Mittelebene erstreckt. In der einen Halbschale 1 besteht dieser Teil-Körper 8 ausschließlich aus Weich-Schaumzucker-Masse, beispielsweise in weißer Farbe. In die andere Halbschale 2 ist mittig unten ein Kugelsegment aus farbig-transparenter eßbarer Gummi-Masse eingegossen, wobei die fertige Weich-Bonbon-Einheit eine Iris simuliert. Dies die Iris 10 simulierende Kugelsegment weist eine stark mit der Farbe des Teil-Körpers 9 kontrastierende Farbe auf. In der Iris 10 ist wiederum ein ebenfalls aus einer eßbaren Masse bestehender linsenförmiger Körper angeordnet, der eine Pupille 11 simuliert. Der übrige Teil-Körper 9 besteht ebenfalls wie der Teil-Körper 8 aus Weich-Schaumzucker-Masse. Die Halbschalen 1, 2 sind mit einer Bedruckung 12 versehen, bei der es sich beispielsweise um die Darstellung roter Äderchen handeln kann.

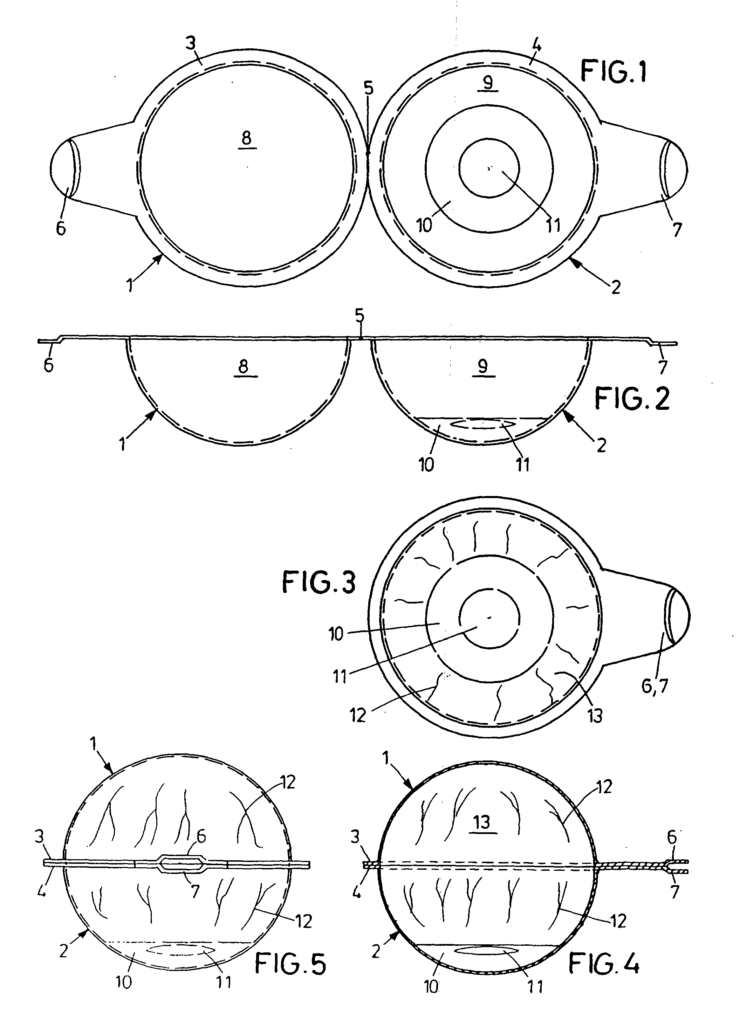

Die Fig. 3, 4 und 5 zeigen das fertige Produkt. Die Halbschalen 1, 2 liegen an den Flanschrändern 3, 4 dicht aneinander und sind hier, beispielsweise durch Ultraschallschweißen, dicht miteinander; aber aufreißbar verbunden. Die beiden Teil-Körper 8, 9 sind in der durch die Flanschränder 3, 4 begrenzten Trennfläche miteinander verbunden bzw. verklebt, sodass sie einen einteiligen und einstückigen Weich-Schaumzucker-Körper 13 bilden. Nach dem Aufreißen der durch die Halbschalen 1, 2 gebildeten Form kann dieser flächig an den Innenseiten der Halbschalen 1, 2 anliegende Körper 13 als ein einheitliches Stück entnommen werden.

## Patentansprüche

1. Weich-Bonbon-Einheit mit
- zwei sich zu einer geschlossenen Kugel-Form ergänzenden Halbschalen (1, 2) aus formstabilem transparentem Kunststoff, die
-- in einer Trennfläche mit Rändern (3, 4) aneinander liegen und
-- zumindest teilweise miteinander verbunden sind, und
- einem Weich-Schaumzucker-Körper (13), der flächig an den Innenseiten der Halbschalen (1, 2) anliegt,
**dadurch gekennzeichnet,**
**dass** der Weich-Schaumzucker-Körper (13) als Augapfel ausgebildet ist, dessen Iris (10) und Pupille (11) im Zenit einer Halbschale (2) angeordnet sind,
**dass** die Iris (10) aus farbig-transparenter eßbarer Gummi-Masse besteht und
**dass** die Pupille (11) aus einem in die Iris (10) eingelegten linsenförmigen Bonbon besteht.

2. Weich-Bonbon-Einheit nach Anspruch 1, **dadurch gekennzeichnet, dass** die Ränder als Flanschränder (3, 4) ausgebildet sind.

3. Weich-Bonbon-Einheit nach Anspruch 1 oder 2, **dadurch gekennzeichnet,**
**dass** die Ränder (3, 4) miteinander verschweißt sind.

4. Weich-Bonbon-Einheit nach Anspruch 1 oder 2, **dadurch gekennzeichnet,**
**dass** die Ränder (3, 4) miteinander elastisch verriegelt sind.

5. Weich-Bonbon-Einheit nach einem der Ansprüche 1 bis 4, **dadurch gekennzeichnet,**
**dass** die Ränder (3, 4) mittels eines Filmscharniers (5) miteinander verbunden sind.

6. Weich-Bonbon-Einheit nach einem der Ansprüche 1 bis 5, **dadurch gekennzeichnet,**
**dass** an den Rändern (3, 4) Öffnungslaschen (6, 7) ausgebildet sind.

7. Weich-Bonbon-Einheit nach einem der Ansprüche 1 bis 6, **dadurch gekennzeichnet,**
**dass** mindestens eine Halbschale (1, 2) mit einer dem Weich-Schaumzucker-Körper (13) zugeordneten Bemusterung bedruckt ist.

## Claims

1. A soft candy unit, comprising
- two half shells (1, 2) of dimensionally stable transparent plastic material, which combine to constitute a closed spherical mold, and
-- which rest on one another by rims (3, 4) on a parting plane, and
-- which are linked to one another at least partially; and
- a soft foamed sugar body (13), which rests planely on the inside of the half shells (1, 2);
**characterized**
**in that** the soft foamed sugar body (13) forms an eyeball, the iris (10) and pupil (11) of which are arranged at the zenith of a half shell (2);
**in that** the iris (10) consists of edible gum mass of transparent colors; and
**in that** the pupil (11) consists of a lenticular sweet that is placed into the iris (10).

2. A soft candy unit according to claim 1, **characterized in that** the rims are flanged rims (3, 4).

3. A soft candy unit according to claim 1 or 2, **characterized in that** the rims (3, 4) are welded together.

4. A soft candy unit according to claim 1 or 2, **characterized in that** the rims (3, 4) are flexibly interlocked.

5. A soft candy unit according to one of claims 1 to 4, **characterized in that** the rims (3, 4) are linked to one another by an integral hinge (5).

6. A soft candy unit according to one of claims 1 to 5, **characterized in that** lugs (6, 7) are formed on the rims (3, 4).

7. A soft candy unit according to one of claims 1 to 6, **characterized in that** a pattern, which is allocated to the soft foamed sugar body (13), is imprinted on at least one half shell (1, 2).

## Revendications

1. Unité de bonbon souple comprenant
- deux demi-coques (1, 2) complémentaires pour former un moule sphérique fermé en matière plastique indéformable, qui
-- sont appliquées l'une contre l'autre dans un plan de séparation présentant des collets (3, 4), et
-- sont du moins partiellement reliées l'une à l'autre,
et
- un corps en sucre mousse souple (13) appliqué par toute sa surface contre les faces intérieures des demi-coques (1, 2),
**caractérisée en ce**
**que** le corps en sucre mousse souple (13) présente la forme d'un oeil dont l'iris (10) et la pupille (11) sont disposés au zénith d'une demi-coque (2),
**que** l'iris (10) est constitué d'une masse de gomme consommable colorée transparente, et
**que** la pupille (11) est constituée d'un bonbon en forme de lentille inséré dans l'iris (10).

2. Unité de bonbon souple selon la revendication 1, **caractérisée en ce que** les bords présentent la forme de collets (3, 4).

3. Unité de bonbon souple selon la revendication 1 ou 2, **caractérisée en ce que** les collets (3, 4) sont soudés l'un à l'autre.

4. Unité de bonbon souple selon la revendication 1 ou 2, **caractérisée en ce que** les collets (3, 4) sont élastiquement verrouillés l'un avec l'autre.

5. Unité de bonbon souple selon l'une quelconque des revendications 1 à 4, **caractérisée en ce que** les collets (3, 4) sont reliés l'un à l'autre au moyen d'une charnière pelliculaire (5).

6. Unité de bonbon souple selon l'une quelconque des revendications 1 à 5, **caractérisée en ce que** des languettes d'ouverture (6, 7) sont formées au niveau des collets (3, 4).

7. Unité de bonbon souple selon l'une quelconque des revendications 1 à 6, **caractérisée en ce qu'**au moins une demi-coque (1, 2) est imprimée par un motif associé au corps en sucre mousse souple (13).
